# EUROPEAN PATENT APPLICATION

(11) **EP 3 153 031 A1**
(43) Date of publication of application: **12.04.2017**
(21) Application number: 16192123.4
(22) Date of filing: 04.10.2016
(51) Int. Cl.: A23L 21/25, A23F 3/14

(54) **HONEY MIXTURE**

(30) Priority: 05.10.2015 CZ 201531591 U
(71) Applicant: Opletal, Petr, 62400 Brno (CZ); Valentovic, Andrej, 92101 Piestany (SK)
(72) Inventor: Opletal, Petr, 62400 Brno (CZ); Valentovic, Andrej, 92101 Piestany (SK)
(74) Representative: Musil, Dobroslav

(57) **Abstract**

The invention relates to a honey mixture with a specified ratio of individual mixture components, which is suitable for dosing into containers in a specified volume amount and is adjusted in this manner for storage, transportion to commercial network and selling to customers. The mixture contains ground leaves of green Matcha tea in dry powder form.

## Description

### Technical field

The invention relates to a honey mixture with a specified ratio of individual mixture components, which is suitable, e.g., for dosing into containers in specified volume amounts and adjusted in this way for storage, transportation to commercial network and selling to consumers.

### Background art

When consuming common kinds of tea processed by usual methods, it is only a part of their components that pass into the brew when poured by hot water that is utilized.

Matcha tea is a kind of green tea grown using a special technique. Its dried leaves are ground into a soft powder which, e.g. poured by hot water, is consumed completely. Thus the whole tea leaf is consumed and all the substances which it contains, e.g., various minerals, vitamins, theophylline and theanine, and especially large amounts of antioxidants which the tea contains, are utilized.

The disadvantage of this method of tea consuming is the fact that it is difficult to consume it alone in the powder state and, at the same time, it is difficult to keep the recommended or specified amount. When poured by water, its powder particles either stick to the vessel walls or descend to the bottom and it is very difficult to achieve and guarantee an even diffusion of its particles in the beverage. It is not possible to ensure its consuming in the guaranteed concentration. This may be unpleasant and even harmful to health, especially because this kind of tea contains, in comparison to common kinds of tea, a many times larger amount of the above-mentioned substances.

### Principle of the invention

The above stated problems are largely removed by using a honey mixture with a specified ratio of the individual components. This honey mixture is suitable, e.g., for dosing into containers in a specified volume amount and adjusted in this way for storage, transportation to commercial network and selling to consumers, according to this invention, whose principle consists in that it is made up of a homogeneous mixture of dried, powder ground leaves of Matcha tea and honey.

This homogeneous honey mixture guarantees that the consumer uses a relatively precise specified amount of Matcha tea and, in this manner, of the constituent substances which positively affect the human body. At the same time, it is possible to sufficiently and precisely keep the required ratio of the individual components in the mixture repeatedly, any time in subsequent consuming, as well as in the production process. Another advantage is the fact that also honey undoubtedly has beneficial effects on the human body.

The mixture of Matcha tea and honey in the paste form guarantees the homogeneity of the whole mixture, an even distribution of individual tea particles in it during the whole period from storage and transportation to the use by consumers. Easy and comfortable consuming of the honey mixture, as well as its possible spread on baked goods, etc., represents another benefit. Another advantage is the fact that there is a lower risk of soiling the consumer's environment, furniture, tablecloths, etc., or consumer's clothes since honey is not sticky and it can be portioned and spread easily.

The size of the Matcha tea particles in the mixture up to 5 or 10 µm guarantees the required homogeneity of the mixture in which the individual Matcha tea particles are, even in the long-term perspective, dispersed in the mixture evenly, they do not descend and do not accumulate at the bottom of the vessel or container.

Spring flower honey and/or sunflower honey make it possible to achieve the paste form of the honey mixture.

The amount of the honey and Matcha tea in the honey mixture dosed in the weight ratio 12 to 20:1 is a proven recommended amount providing the intake of a suitable amount of the substances contained in Matcha tea into the human body.

### Examples of embodiment

### Example 1

The honey mixture in the paste form composed of 20 parts by weight of the spring flower honey and 1 part by weight of Matcha tea dosed by one portion in plastic tub-shaped containers sealed on the top by an aluminium foil with appropriate information printed. Each tub-shaped container contains 20g of spring flower honey and 1 g of Matcha tea.

### Industrial applicability

According to this invention, the honey mixture is suitable especially for rational production of foodstuffs, beverages or medicines which are beneficial to human health with a high content of components beneficial to human health. It is suitable for long-term storage and transportation in different plastic or glass containers in specified volume or weight amounts or even in individual portions.

## Claims

1. A honey mixture which has a specified ratio of individual components suitable, for example, for placing in containers in doses in a specified volume amount and in this manner adjusted and suitable for storage, transportation to commercial network and selling to consumers **characterized by that it** consists of a homogeneous mixture of dried powder ground leaves of green Matcha tea and honey.

2. The honey mixture according to claim 1, **characterized by that** the mixture of honey and Matcha tea is in the paste form.

3. The honey mixture according to claims 1 or 2, **characterized by that** the size of the Matcha tea powder particles is up to 5 to 10 µm.

4. The honey mixture according to any of claims 1 to 3, **characterized by that** the honey is the spring flower and /or sunflower kind.

5. The honey mixture according to any of claims 1 to 4, **characterized by that** the amount of honey and Matcha tea in the honey mixture is dosed in the weight ratio of 12 to 20:1.
